# DEMANDE DE BREVET EUROPEEN

(11) **EP 4 374 674 A1**
(43) Date de publication de la demande: **29.05.2024**
(21) Numéro de dépôt: 23211390.2
(22) Date de dépôt: 22.11.2023
(51) Int. Cl.: A01B 3/46, A01B 17/00, A01B 63/32, A01B 3/42

(54) **PROCEDE DE CONTROLE ET DE COMMANDE D'AU MOINS UN DISPOSITIF DE TRAVAIL ADDITIONNEL EQUIPANT UNE CHARRUE REVERSIBLE ET UNE TELLE CHARRUE REVERSIBLE**

(30) Priorité: 23.11.2022 FR 2212212
(71) Demandeur: Kuhn-Huard S.A.S, 44110 Chateaubriant (FR)
(72) Inventeur: GAUTRON, Herrman, 44670 SAINT JULIEN DE VOUVANTES (FR)
(74) Mandataire: Hager, Esther Evelyne

(57) **Abrégé**

Procédé de contrôle et de commande d'au moins un dispositif de travail additionnel (2) équipant une charrue réversible apte à être attelée à un véhicule tracteur et comprenant un bâti (3) longitudinal, au moins un tel dispositif de travail additionnel (2) relié au bâti (3) par l'intermédiaire d'au moins deux bras de liaison (4) formant chacun un parallélogramme (P) de liaison déformable, le bâti (3) étant apte à être soulevé par rapport au sol (S) et à pivoter autour d'un axe (X) de pivotement, de préférence de l'ordre de 180°, pour réaliser le retournement de la charrue.

Il consiste, lors du retournement de la charrue, à détecter l'angle de pivotement du bâti (3) et à le comparer avec une valeur d'angle de consigne (β1) présélectionnée entre 5° et 60° et, lorsque l'angle de pivotement ainsi détecté correspond à la valeur d'angle de consigne (β1) présélectionnée, à commander chaque parallélogramme (P) de liaison déformable dans une configuration particulière et à maintenir cette dernière selon une séquence de maintien prédéterminée. La présente invention a également pour objet une charrue réversible permettant la mise en oeuvre du procédé.

## Description

La présente invention concerne le domaine du machinisme agricole, plus particulièrement les instruments aratoires, tels que les charrues, utilisés pour labourer les champs et attelés à des véhicules du type tracteur. Elle a pour objet un procédé de contrôle et de commande d'au moins un dispositif de travail additionnel équipant une charrue réversible. Elle a également pour objet une telle charrue réversible. Cette dernière permet la mise en oeuvre du procédé de contrôle et de commande.

Les charrues sont généralement attelées à l'avant ou à l'arrière d'un tracteur et servent au travail du sol en amont d'un semis. Plus particulièrement, elles comprennent un bâti portant des corps de labour permettant, en position de travail de la charrue, de labourer la couche superficielle du sol, qui a la plus forte concentration de matière organique et de micro-organismes, pour notamment : l'ameublir afin d'améliorer la pénétration de l'air et de la chaleur, enfouir dans le sol les résidus de récolte, détruire par enfouissement la végétation et certains parasites et faciliter la préparation du lit de semence.

On connait également des charrues réversibles dont le bâti est monté pivotant autour d'un axe de pivotement et porte deux groupes de corps de labour. L'un des groupes de corps de labour permet un labour à droite dans une première position de travail et l'autre groupe de corps de labour permet le labour à gauche dans une deuxième position de travail, selon le sens de progression du tracteur. Dans chaque position de travail, les deux groupes de corps de labour sont disposés l'un au-dessus de l'autre en étant inversés l'un par rapport à l'autre. Celui du bas est orienté positivement pour être en contact avec le sol de manière opérationnelle.

Le pivotement du bâti de la charrue permet d'inverser la position des groupes de corps de labour l'un par rapport à l'autre, pour les placer en alternance dans la première ou la deuxième position de travail de la charrue. Le passage de la première position de travail à la deuxième position de travail, ou réciproquement, est usuellement appelé retournement de la charrue.

Ainsi, lors du retournement de la charrue depuis l'une des positions de travail, dans un premier temps, le bâti est soulevé au-delà du sol puis, dans un deuxième temps, est pivoté autour de l'axe de pivotement, pour inverser la position des deux groupes de corps de labour l'un par rapport à l'autre et permettre le labour à gauche ou à droite et finalement, dans un troisième temps, est abaissé vers le sol pour mettre la charrue dans l'autre position de travail.

Ces opérations de retournement d'une charrue réversible sont généralement effectuées à l'occasion d'un changement du sens de progression du tracteur par rapport au champ à labourer, généralement lorsque celui-ci arrive en bout de champ et repart dans le sens inverse.

Pour éviter le dessèchement du sol labouré, ces charrues réversibles comprennent en outre un rouleau formant un équipement additionnel embarqué sur la charrue et destiné à accompagner le travail des groupes de corps de labour. Le rouleau est conçu de sorte à pouvoir, en position de travail, rappuyer le sol en roulant sur la terre qui a été retournée par les corps de labour lors du passage précédent, ce qui a pour effet d'écraser les mottes de terre et de parfaire l'émiettement. Cette action supplémentaire de travail du sol par ce rouleau permet d'assurer par la suite un meilleur contact des graines avec la terre lors de l'ensemencement.

Le rouleau comprend un châssis en forme de poutre s'étendant sensiblement parallèlement au bâti de la charrue et sur laquelle poutre sont fixées des paires d'anneaux qui constituent la partie du rouleau destinée à être en contact avec le sol. Le châssis du rouleau est relié au bâti de la charrue par l'intermédiaire de deux bras de liaison commandés. Chaque bras de liaison comprend, d'une part, deux branches montées de manière articulée et arrangées de manière à constituer un parallélogramme déformable et, d'autre part, un actionneur conçu et agencé pour pouvoir actionner le déplacement des branches articulées, de sorte à commander le parallélogramme déformable dans des configurations variées. Ces configurations qui correspondent à des positions respectives du rouleau, permettent de contrôler la pression du dispositif de travail additionnel sur le sol.

Une charrue équipée d'un tel rouleau est connue par le document WO-A-2013091608. Toutefois, avec ce type de charrue, à chaque modification de profondeur du labour, l'utilisateur doit ajuster le réglage du rouleau et vérifier si le rappui est correct.

Le document FR 3104375 divulgue également une charrue équipée d'un tel rouleau, qui remédie à ce problème en garantissant une pression d'appui constante, quelle que soit la profondeur de labour et une adaptation automatique en présence de dénivellations de terrain permettant la préservation de la structure du sol. A cet effet, chaque actionneur consiste en un vérin à double effet et à double tige. Chaque vérin comporte ainsi deux chambres avec des sections de travail équivalentes.

Toutefois, avec ces charrues réversibles de l'art antérieur, lors du retournement de la charrue pour l'amener dans l'autre position de labour à droite ou à gauche, plus particulièrement dans certaines configurations du terrain, il peut arriver que l'inversion du rouleau ne se fasse pas correctement, notamment du fait d'un manque d'inertie du rouleau. Si le rouleau n'est pas dans la position adéquate, c'est-à-dire orienté du bon côté vers le sol pour être en contact positif avec le sol, l'opération de rappui du sol précédemment labouré ne sera pas effectuée. Ainsi, il arrive fréquemment que l'opérateur soit contraint à faire pivoter le bâti de la charrue d'un tour complet, soit de deux retournements successifs de l'ordre de 180°, pour que l'équipement embarqué puisse s'inverser et basculer dans la position adéquate en étant positivement orienté vers le sol. Parfois, l'opérateur doit même avancer et/ou reculer le tracteur pour positionner la charrue sur un plan plus ou moins horizontal. Ces manoeuvres supplémentaires font perdre du temps. Par ailleurs, l'opérateur doit être attentif à chaque retournement en bout de champ et toujours vérifier si le rouleau a été inversé et se trouve dans la bonne position/orientation pour pouvoir repartir et poursuivre le labour.

Ainsi, même avec la gravité, l'inversion du rouleau n'est pas toujours réalisée correctement, c'est-à-dire du bon côté, consécutivement au retournement de la charrue d'une position de travail à l'autre.

D'autres équipements embarqués tels qu'une roue de jauge sont connus et concernés par un tel problème d'inversion, mais le risque que le rouleau ne bascule pas ou ne s'inverse pas du bon côté est plus important que pour ces autres équipements, à cause de la nature du rouleau et de sa liaison sur le bâti. En effet, l'inertie du rouleau est insuffisante pour inverser le rouleau.

La présente invention a pour but de pallier ces inconvénients d'inversion en proposant un procédé de contrôle et de commande d'au moins un dispositif de travail additionnel équipant une charrue réversible portée ou semi-portée et une telle charrue réversible équipée d'un tel dispositif de travail additionnel, permettant d'assurer de manière certaine, consécutivement à chaque retournement de la charrue, l'inversion du bon côté du ou d'au moins l'un des dispositif(s) de travail additionnel(s), plus particulièrement du ou d'au moins un dispositif de travail additionnel du type rouleau de rappui, ceci qu'importe l'horizontalité du sol sur lequel se trouve la charrue et le véhicule tracteur.

A cet effet, la présente invention a pour objet un procédé de contrôle et de commande d'au moins un dispositif de travail additionnel équipant une charrue réversible selon la revendication 1. La présente invention a également pour objet une charrue réversible selon la revendication 6.

L'invention sera mieux comprise grâce à la description ci-après, qui se rapporte à un mode de réalisation préféré, donné à titre d'exemple non limitatif et expliqué avec référence aux dessins schématiques annexés, dans lesquels :

[Fig. 1] représente une vue de dessus d'une charrue selon la présente invention attelée à un véhicule tracteur, dans une première position de travail, avec un dispositif de travail additionnel commandé,

[Fig. 2] est une vue de face de la partie avant de la charrue représentée sur la figure 1 et montrant, en traits continus, la charrue dans la première position de travail de la figure 1 et, en traits interrompus, la position de ladite charrue lors de son retournement avec un angle de pivotement du bâti correspondant à la première valeur d'angle de consigne présélectionnée,

[Fig. 3] montre, en traits continus, la charrue représentée sur la figure 2 dans une position de pivotement intermédiaire entre les première et deuxième positions et, en traits interrompus, dans la deuxième position de travail consécutive au retournement de la charrue depuis la première position de travail représentée sur la figure 1 en passant par la position intermédiaire,

[Fig. 4] est une vue de face d'un bras de liaison reliant le dispositif de travail additionnel au bâti de la charrue représentée sur la figure 2 ou la figure 3 dans la configuration particulière du parallélogramme de liaison déformable,

[Fig. 5] représente le circuit hydraulique de commande des actionneurs permettant de commander la configuration des parallélogrammes déformables dans la configuration particulière représentée sur la figure 4.

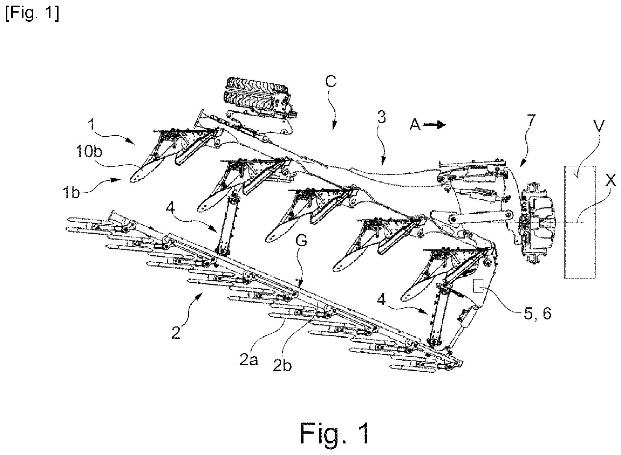

Les figures annexées montrent une charrue C réversible selon la présente invention, apte à être attelée à un véhicule tracteur V et comprenant un bâti 3 longitudinal, au moins un dispositif de travail principal 1 du sol S monté sur le bâti 3 et au moins un dispositif de travail additionnel 2 relié au bâti 3 par l'intermédiaire d'au moins deux bras de liaison 4. La figure 1 représente une charrue C portée destinée à être attelée à l'attelage trois points d'un véhicule tracteur V. Le bâti 3 est apte à être soulevé par rapport au sol et à pivoter autour d'un axe X de pivotement, de préférence de l'ordre de 180°, pour réaliser le retournement de la charrue C depuis une première position de travail jusqu'à une deuxième position de travail et réciproquement, suivant le sens d'avancement A de la charrue C. Chaque bras de liaison 4 comprend deux branches 4a, 4b articulées et arrangées de manière à constituer un parallélogramme P de liaison déformable et au moins un actionneur 4c permettant d'actionner le déplacement des branches 4a, 4b de sorte à pouvoir commander le parallélogramme de liaison déformable dans des configurations variées.

Le dispositif de travail additionnel 2 peut travailler alternativement dans la première position ou la deuxième position à la suite du pivotement du bâti 3, de préférence de 180° environ.

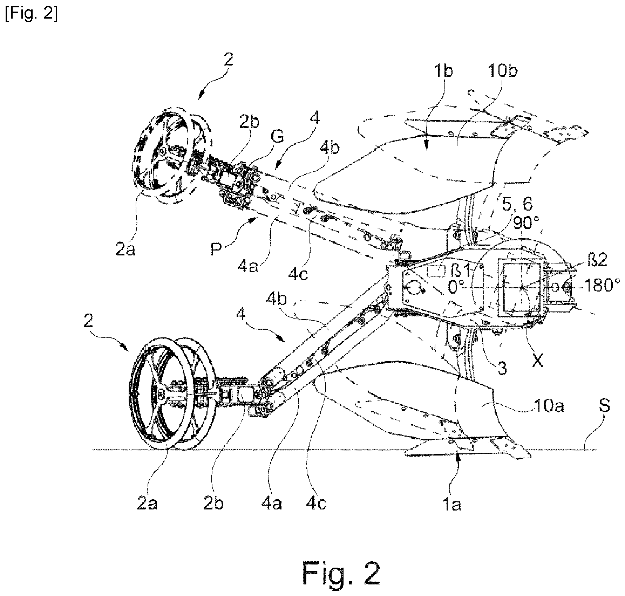

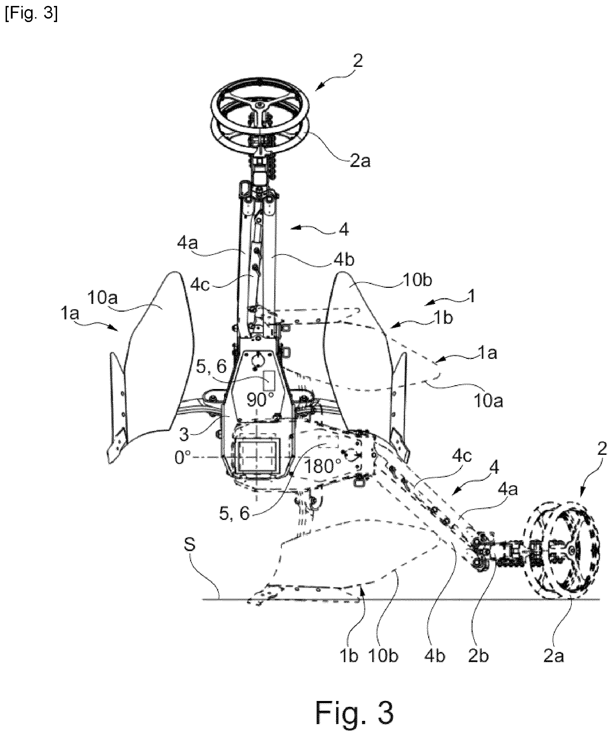

Dans la présente description, la première position de travail correspond par exemple à une position de travail en labour à droite (figures 1 et 2) et la deuxième position de travail correspond par exemple à une position de travail en labour à gauche (figure 3 en traits interrompus). Dans la première position de travail, le bâti 3 se trouve dans une première position correspondant à un angle de pivotement nul. Un angle de pivotement nul signifie un angle proche de la valeur zéro degré (0°). Dans la deuxième position de travail, de préférence, le bâti 3 a effectué un pivotement de 180° autour de l'axe X dans le sens horaire. Cette deuxième position de travail correspond donc à un angle de pivotement plat (de 180°).

On comprend que, dans chaque position de travail, chaque parallélogramme P de liaison déformable est commandé dans une configuration spécifique, dite configuration de travail, pour pouvoir assurer sa fonction de travail, par exemple, le cas échéant, de rappui du sol labouré. De préférence, en position de travail de la charrue C, chaque parallélogramme P de liaison déformable est agencé dans un plan vertical ou sensiblement vertical (voir notamment les figures 2 et 3).

Comme on peut le voir sur les figures 1 à 3, le dispositif de travail principal 1 du sol S d'une telle charrue C réversible comprend préférentiellement deux groupes de corps de labour 1a, 1b, à savoir un premier groupe de corps de labour 1a et un deuxième groupe de corps de labour 1b, orientés différemment, c'est-à-dire inversés l'un par rapport à l'autre. En position de travail de la charrue C, dans la première ou la deuxième position de travail, les deux groupes de corps de labour 1a, 1b sont disposés l'un au-dessus de l'autre, celui du bas étant orienté positivement de sorte à être contact avec le sol S de manière opérationnelle. Chaque groupe de corps de labour 1a, 1b comprend des versoirs 10a, 10b qui sont ainsi orientés en opposition par rapport aux versoirs 10a, 10b de l'autre groupe de corps de labour 1a, 1b. Chaque groupe de corps de labour 1a, 1b comprend également des socs et des pointes. Ces pièces de labour dans une charrue sont bien connues et ne sont donc pas décrites plus en détail dans la présente demande.

Dans la première position de travail, comme on peut le voir sur les figures 1 et 2 (en traits continus), le premier groupe de corps de labour 1a est situé en dessous en étant orienté positivement de sorte à être en contact de manière opérationnelle avec le sol S et le deuxième groupe de corps de labour 1b est situé au-dessus dans une orientation inversée et non opérationnelle.

Si on se réfère à la figure 3, on peut voir que dans la deuxième position de travail faisant suite au retournement, par un pivotement du bâti 3 autour de l'axe de pivotement de l'ordre de 180° de la charrue C depuis la première position de travail, les deux groupes de corps de labour 1a, 1b (représentés en traits interrompus) sont inversés l'un par rapport à l'autre, de sorte que le premier groupe de corps de labour 1a est situé au-dessus et le deuxième groupe de corps de labour 1b est situé en-dessous en étant orienté positivement de sorte à être en contact avec le sol S de manière opérationnelle. Dans une position intermédiaire de la charrue C, c'est-à-dire une position située entre les deux positions de travail, comme on peut le voir également sur la figure 3, les deux groupes de corps de labour 1a, 1b (représentés cette fois en traits continus) sont agencés l'un à côté de l'autre, sensiblement à la même hauteur et les parallélogrammes P de liaison déformables sont orientés verticalement, dans le sens de leur longueur.

Pour pouvoir retourner la charrue C, le bâti 3 est tout d'abord soulevé au-delà du sol S depuis la première ou la deuxième position de travail pour éloigner les groupes de corps de labour 1a, 1b du sol, puis pivoté autour de l'axe de pivotement X pour inverser la position des groupes de corps de labour 1a, 1b l'un par rapport à l'autre. Finalement, le bâti 3 est abaissé vers le sol S pour poursuivre le labour au moyen de l'autre groupe de corps de labour 1b, 1a. Cette opération de retournement peut être effectuée plus particulièrement à l'occasion d'une inversion de la progression du véhicule tracteur V par rapport au champ à labourer, c'est-à-dire à la suite d'un demi-tour du tracteur en fin de champ.

Si on se réfère aux figures 1 à 3, on peut voir en outre que la charrue C comprend une tête 7 d'attelage équipée de moyens d'attelage, par exemple à un attelage trois points du véhicule tracteur V, et de moyens de retournement de la charrue C pour réaliser le pivotement du bâti 3 autour de l'axe de pivotement X. Ces moyens d'attelage et de retournement sont bien connus et ne sont donc pas décrits ici plus en détail.

La commande de la rotation du bâti 3 autour de l'axe de pivotement X, qui permet donc à la charrue C de passer de la première position de travail (figure 2) à la deuxième position de travail (figure 3) ou réciproquement pour réaliser son retournement, entraîne ainsi la commande du mouvement d'inversion du dispositif de travail principal 1 et également celle du dispositif de travail additionnel 2. On comprend alors que le dispositif de travail additionnel 2 s'inverse/bascule lors du retournement de la charrue C pour pouvoir être orienté du bon côté.

De manière connue, préférentiellement le ou au moins l'un des dispositif(s) de travail additionnel(s) 2 peut comprendre, d'une part, des moyens de roulement ou de roulage formant un rouleau 2a du type rouleau de rappui et, d'autre part, une poutre support 2b sur laquelle est montée le rouleau. En outre, la poutre support 2b est reliée au bâti 3 par l'intermédiaire des bras de liaison 4 (figures 1 à 3). Tel que représenté sur la figure 1, le rouleau 2a est relié au bâti 3 au moyen de deux bras de liaison 4, l'un situé plutôt à l'avant et l'autre situé plutôt à l'arrière de la poutre support 2b. La charrue C est équipée de cinq corps de labour. Le bras de liaison avant est situé dans le voisinage du premier corps de labour et le bras de liaison arrière est situé dans le voisinage de l'avant-dernier corps de labour de la charrue C. Dans cet exemple de réalisation de la charrue C, l'avant-dernier corps de labour correspond au quatrième corps de labour. La poutre support 2b du dispositif de travail additionnel 2 s'étend parallèlement au bâti 3 de la charrue C.

Le dispositif de travail additionnel 2 forme ainsi un équipement embarqué sur la charrue C qui est destiné à accompagner le travail du dispositif de travail principal 1 du sol S, notamment le travail des groupes de corps de labour 1a, 1b. Cet équipement embarqué est relié au bâti 3 pour que sa mise en position de travail soit spontanée consécutivement au retournement des groupes de corps de labour 1a, 1b. Ensemble les corps de labour 1a, 1b et le rouleau 2a créent un lit de semence optimal avec une surface bien émiettée et un sol rappuyé en profondeur pour conserver un maximum d'humidité. Le rouleau 2a va agir sur la bande de terre retournée par les corps de labour 1a, 1b lors du passage précédent.

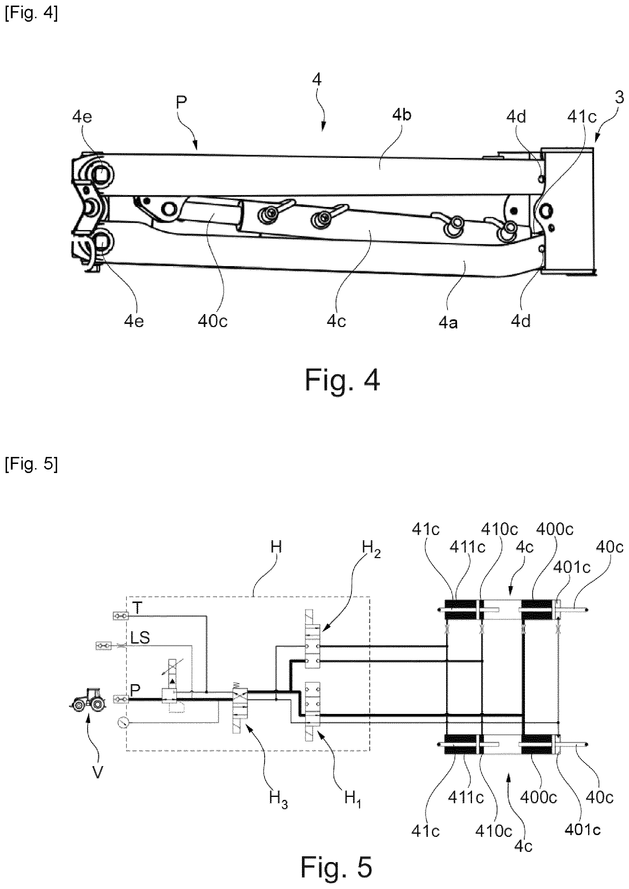

De préférence, chaque actionneur 4c peut consister, de manière connue par exemple du document FR 3104375, en au moins un vérin à double effet et à double tige (figures 2, 3, 4 et 5). On peut voir, notamment sur la figure 5, que chaque vérin comprend deux tiges 40c, 41c, à savoir une première tige 40c et une deuxième tige 41c, actionnées en entrée ou sortie à l'une des extrémités du vérin sous l'effet d'une pression hydraulique à l'intérieur de la chambre de sortie 400c, 410c ou de la chambre d'entrée 401c, 411c correspondante. Comme on peut le voir notamment sur la figure 4, chaque branche 4a, 4b peut être articulée, d'une part via une articulation 4e, sur la poutre support 2b (non représentée sur la figure 4) du dispositif de travail additionnel 2 et, d'autre part via une articulation 4d, sur le bâti 3 de la charrue C. En outre, le ou chaque vérin à double effet et à double tige de chaque bras de liaison 4 peut être articulé, d'une part, par l'extrémité de sa première tige 40c, à l'une des branches 4a, 4b du bras de liaison 4, de préférence du côté ou à proximité de la poutre support 2b (ou du rouleau 2a) et par l'extrémité de sa deuxième tige 41c, à l'une des articulations 4d situées du côté du bâti 3 de la charrue C (voir notamment la figure 4).

Conformément à la présente invention, une telle charrue C comprend en outre un détecteur 5 d'angle de pivotement du bâti 3 et une unité de contrôle et de commande 6 électronique reliée au détecteur 5 et aux actionneurs 4c.

Toujours conformément à la présente invention, l'unité de contrôle et de commande 6 est configurée, en considérant un sens de pivotement positif du bâti 3 autour de l'axe X de pivotement depuis l'une des positions de travail (première ou deuxième position de travail), d'angle de pivotement nul, à l'autre position de travail (deuxième ou première position de travail) :

- pour comparer, lors du pivotement du bâti 3, l'angle de pivotement détecté (par le détecteur 5 d'angle de pivotement) à une valeur d'angle de consigne β1 présélectionnée entre 5° et 60°, de préférence entre 15° et 30°, plus préférentiellement entre 20° et 25°,

- et, lorsque l'angle de pivotement ainsi détecté correspond à la valeur d'angle de consigne β1, pour commander chaque parallélogramme P de liaison déformable dans une configuration particulière et pour maintenir cette dernière selon une séquence de maintien prédéterminée. Grâce au détecteur 5 d'angle et à l'unité de contrôle et de commande 6 électronique, le positionnement du dispositif de travail additionnel 2 et le déclenchement de son positionnement, sous l'effet de la déformation des parallélogrammes P déformables, se font de manière automatique. Le risque de non-inversion du dispositif de travail additionnel 2 n'existe plus lors du retournement de la charrue C. Grâce au détecteur 5 de l'invention, le dispositif de travail additionnel 2 est toujours bien positionné pour rappuyer le sol labouré.

Dans un mode de réalisation préférentiel, l'unité de contrôle et de commande 6 est configurée, dans la séquence de maintien prédéterminée de la configuration particulière, pour, d'une part, comparer l'angle de pivotement détecté à une deuxième valeur de consigne β2 présélectionnée entre 90° et 180°, de préférence entre 120° et 160°, plus préférentiellement entre 145° et 150° et, d'autre part, lorsque l'angle de pivotement ainsi détecté correspond à la deuxième valeur d'angle de consigne β2, pour placer chaque parallélogramme P de liaison déformable dans une autre configuration. Cette autre configuration correspond à la configuration de travail précitée.

Dans une autre forme de réalisation de la séquence de maintien prédéterminée de la configuration particulière de chaque parallélogramme P de liaison déformable, la présente invention peut prévoir l'utilisation d'une temporisation. Cette temporisation peut être déclenchée par la détection de l'angle de pivotement β1 ou d'un autre angle de pivotement détecté par le détecteur 5, tel que l'angle de pivotement de 90°. La durée de cette temporisation peut être, par exemple, déterminée de sorte que, une fois cette durée écoulée, l'angle de pivotement du bâti 3 corresponde à un angle de pivotement égal à la deuxième valeur d'angle de consigne β2. Le déclenchement et la durée de la temporisation peuvent être gérés par l'unité de contrôle et de commande 6. Une fois la durée écoulée, l'unité de contrôle et de commande 6 est adaptée pour commander la configuration de travail de chaque parallélogramme P de liaison déformable. La durée peut être mémorisée dans une mémoire, par exemple de l'unité de contrôle et de commande 6.

De préférence, comme on peut le voir sur les figures 2, 3 et 4, chaque parallélogramme P de liaison déformable peut présenter une forme rectangulaire dans la configuration particulière. On peut voir plus particulièrement que les branches 4a et 4b forment les grands côtés du rectangle et que les parties de liaison au bâti 3 et à la poutre support 2b forment les petits côtés. Dans la première ou la deuxième position de travail, c'est-à-dire en position de labour à droite ou à gauche, les parallélogrammes P de liaison déformables ont chacun une autre forme de parallélogramme, par exemple une forme de losange, c'est-à-dire une forme de parallélogramme non rectangle, comme on peut le voir sur la figure 2 en traits continus et sur la figure 3 en traits interrompus. La présente invention n'exclut toutefois pas que chaque parallélogrammes P de liaison déformable puisse être commandé dans la première ou la deuxième position de travail pour présenter une forme rectangulaire si les conditions de travail le nécessitent, par exemple en fonction du plan ou de la surface sur laquelle évolue la charrue C ou encore de la pression d'appui (ou de rappui) à exercer.

Chaque parallélogramme P de liaison déformable est de préférence maintenu dans la configuration particulière, de préférence dans la forme rectangulaire, au-delà d'un angle de pivotement de 90° correspondant à un angle de pivotement droit. On comprend alors que la charrue C, lors de son retournement, passe la position correspondant à un angle de pivotement droit avec chaque parallélogramme P de liaison déformable maintenu dans la configuration particulière, de préférence dans une forme rectangulaire. La figure 3 illustre en traits continus, le dispositif de travail additionnel 2 et le bâti 3 lors du retournement de la charrue C dans une position médiane. Cette position médiane correspond à un angle de pivotement droit (90°) du bâti 3. Pour une meilleure compréhension, le vérin de pliage à l'avant du bras de liaison 4 a été caché sur les figures 2, 3 et 4. Pour la configuration de transport, le dispositif de travail additionnel 2 est rapproché du bâti 3 de la charrue C pour réduire la hauteur de l'ensemble charrue C avec le dispositif de travail additionnel 2.

Dans la première ou la deuxième position de travail, c'est-à-dire en position de labour à droite ou à gauche, le rouleau 2a est plus ou moins désaxé en fonction de la profondeur de travail et les parallélogrammes P de liaison déformables ont chacun une forme de parallélogramme. Plus les branches 4a et 4b sont éloignées l'une de l'autre, plus la profondeur de labour est importante ou plus les branches 4a et 4b sont proches l'une de l'autre, plus la profondeur de labour est faible. La configuration particulière des parallélogrammes P de liaison déformables maintenue selon la séquence de maintien prédéterminée, permet de réduire le désaxement. En effet, lorsque le parallélogramme P de liaison est de forme rectangle, le rouleau 2a, notamment son centre de gravité G au niveau de la poutre support 2b (figure 2 en traits interrompus et figure 3 en traits continus), est aligné ou sensiblement aligné avec le centre du bâti 3 de la charrue C. Cette configuration particulière, notamment en forme de rectangle, simplifie et surtout garantit le transfert du dispositif de travail additionnel 2 du bon côté et dans la bonne orientation. Cette configuration particulière des parallélogrammes P au cours du cycle de retournement de la charrue C apporte une garantie quant à une inversion correcte du dispositif de travail additionnel 2 et sans interférence avec le dispositif de travail principal 1 de la charrue C. La poutre support 2b du rouleau s'étend alors entre les deux plans passant par les branches 4a et 4b de chaque bras de liaison 4.

Dans une forme de réalisation préférentielle du détecteur 5 d'angle de pivotement, celui-ci peut consister en au moins un capteur de position angulaire. Un tel capteur peut être un gyroscope, un gyroscope électronique ou encore un capteur de fréquence ou de vitesse angulaire. Un tel capteur mesure l'angle de pivotement de la charrue C lors de sa rotation autour de l'axe X de pivotement. Le capteur mesure l'angle de rotation du bâti 3 lors du retournement de la charrue C. Le signal électrique représentatif de cette mesure est interprété par l'unité de contrôle et de commande 6 pour en déduire une valeur d'angle de pivotement qui sera comparée à la ou aux valeurs d'angles de consigne β1, β2 présélectionnée(s) et mémorisées. Dans un exemple de réalisation, la charrue C dispose d'un seul capteur de position angulaire. D'une manière avantageuse, plusieurs seuils angulaires de détection (angles de consigne), par exemple deux angles de consigne présélectionnés β1, β2 peuvent être prévus pour au moins un capteur, de préférence un unique capteur. De préférence, le détecteur 5, c'est-à-dire dans ce cas le ou chaque capteur de position angulaire, mesure l'angle de pivotement en continu ou à chaque instant. Le détecteur 5 permet de contrôler en permanence le côté où se situe le rouleau 2a et de commander le bon sens de rappui. Dans un autre exemple de réalisation, le détecteur 5 d'angle de pivotement peut consister en l'utilisation de deux capteurs de position angulaire, de préférence du type gyroscope.

En outre, de préférence, comme on peut le voir sur les figures 1 à 3, le détecteur 5 d'angle de pivotement et/ou l'unité de contrôle et de commande 6 électronique peuvent être monté(e)(s) chacun(e) sur le bâti 3, de préférence au plus près de l'attelage avec le véhicule tracteur V (ou de la tête d'attelage 7), ou sur au moins l'un des bras de liaison 4, de préférence sur l'une des branches 4a, 4b de ce ou ces dernier(s). Le détecteur 5, par exemple le ou chaque capteur de position angulaire constituant ce dernier, peut être fixé sur l'un(e) des pièces, éléments, organes ou parties constitutives de la charrue C mû(e) en rotation autour de l'axe de pivotement X, par exemple sur le bâti 3. Le détecteur 5 en étant implanté, par exemple, sur la partie avant du bâti 3, au plus près du dispositif d'attelage du véhicule tracteur V, la fiabilité de la détection par le détecteur 5 sera meilleure. Dans l'exemple représenté, le détecteur 5 d'angle de pivotement est monté sur une partie du bâti 3 reliée au bras de liaison 4 avant (figures 1 et 2).

De préférence, le détecteur 5 d'angle de pivotement peut être relié (fonctionnellement) à l'unité de contrôle et de commande 6 électronique, soit en étant intégré dans l'unité de contrôle et de commande 6 électronique, soit en étant dissocié de l'unité de contrôle et de commande 6 électronique. L'unité de contrôle et de commande 6 électronique peut être, de préférence, montée dans un boîtier, de préférence étanche. Le détecteur 5 d'angle de pivotement peut être monté dans un boîtier, de préférence étanche. De préférence, que le détecteur 5 d'angle de pivotement soit intégré dans l'unité de contrôle et de commande 6 électronique ou dissocié de cette dernière, la présente invention peut prévoir, comme on peut le voir sur les figures 1 à 3, un boîtier, de préférence étanche, commun (unique). Dans la réalisation préférée, le détecteur 5 est intégré à l'unité de contrôle et de commande 6 électronique. Ces deux éléments sont intégrés dans un boîtier étanche et commun. L'intégration évite les câblages, les connecteurs entre les deux éléments et une fixation spécifique du détecteur 5. L'absence de câblage évite le problème d'exposition à la terre et augmente la fiabilité. Le boîtier est, par exemple, fixé par des boulons sur la charrue C, plus particulièrement sur son bâti 3. Lorsque le détecteur 5 est intégré à l'unité de contrôle et de commande 6 électronique, la solution est économique et surtout sans connexion physique avec l'environnement mécanique. Il n'y a alors pas de support, pas de came de détection, pas de câblage électrique à installer. Avec cette solution intégrée, l'utilisateur ne peut intervenir en déplaçant les éléments ou en modifiant les réglages. Le risque d'abimer la charrue C ou le rouleau est absent. De préférence, l'utilisateur n'a pas accès au réglage des angles de consigne.

Si on se réfère maintenant à la figure 5, on peut voir le circuit hydraulique H des actionneurs 4c, plus particulièrement formés chacun par un vérin à double effet et à double tige. Ce circuit hydraulique H peut par exemple être embarqué sur la charrue C et être alimenté en fluide hydraulique sous pression par le circuit hydraulique du véhicule tracteur V. Ce circuit hydraulique H est configuré pour assurer la commande des vérins contrôlant la configuration des parallélogrammes P de liaison déformables. Le circuit hydraulique H comprend notamment des électrovannes, par exemple deux électrovannes H1, H2, contrôlant l'état des vérins. La première électrovanne H1 permet de commander l'actionnement de l'entrée/de la sortie de la première tige 40c de chaque vérin et la deuxième électrovanne H2 permet de commander l'entrée/la sortie de la deuxième tige 41c de chaque vérin. L'électrovanne H1 ou H2 sélectionne la chambre du vérin à alimenter. Le circuit hydraulique H comporte encore une troisième électrovanne H3, qui commande l'inversion du positionnement du rouleau (par rapport au retournement de la charrue C).

Toujours sur la figure 5, on peut voir que, dans une forme de réalisation préférentielle de la commande du circuit hydraulique H permettant la réalisation de la séquence de maintien dans la configuration particulière, la première électrovanne H1 peut être commandée de sorte à remplir de fluide hydraulique sous pression la chambre de sortie 400c de la première tige 40c pour mettre cette dernière en position de sortie. On peut voir également que la deuxième électrovanne H2 peut être commandée de sorte à bloquer la pression hydraulique de la chambre d'entrée 411c de la deuxième tige 41c pour maintenir cette dernière dans sa position rentrée. Pour faire passer chaque parallélogramme P de liaison déformable de sa configuration particulière à la configuration de travail, la première électrovanne H1 peut être commandée de sorte à remplir de fluide hydraulique sous pression la chambre d'entrée 401c de la première tige 40c pour mettre cette dernière en position rentrée (cette commande n'est pas représentée sur la figure 5).

On comprend que la commande des composants du circuit hydraulique, tels que les électrovannes H1, H2, H3 est effectuée par le circuit de contrôle et de commande 6 électronique relié fonctionnellement au circuit hydraulique H.

La présente invention a également pour objet un procédé de commande d'au moins un dispositif de travail additionnel 2 équipant une charrue C réversible portée ou semi-portée. Une telle charrue C peut être une charrue C selon la présente invention telle que décrite précédemment et permettant ou convenant à la mise en oeuvre du procédé.

Conformément à la présente invention, un tel procédé consiste lors du retournement de la charrue C, en considérant un sens de pivotement positif (ou dit autrement le sens horaire) du bâti 3 autour de l'axe X de pivotement depuis l'une des positions de travail d'angle de pivotement nul à l'autre position de travail :

- à détecter l'angle de pivotement du bâti 3 et à le comparer avec une valeur d'angle de consigne β1 présélectionnée entre 5° et 60°,

- lorsque l'angle de pivotement ainsi détecté correspond à la valeur d'angle de consigne β1 présélectionnée, à placer chaque parallélogramme P de liaison déformable dans une configuration particulière et à maintenir cette dernière selon une séquence de maintien prédéterminée.

Dans un mode de réalisation préféré, le procédé peut consister, dans la séquence de maintien prédéterminée, à détecter l'angle de pivotement du bâti 3 et à le comparer à une deuxième valeur de consigne β2 présélectionnée entre 90° et 180° et lorsque l'angle de pivotement ainsi détecté correspond à la deuxième valeur d'angle de consigne β2 présélectionnée, à placer chaque parallélogramme P de liaison déformable dans une autre configuration. Cette autre configuration peut être la configuration de travail décrite plus haut, permettant le travail opérationnel du ou de chaque dispositif de travail additionnel 2 dans la première ou la deuxième position de travail de la charrue C.

Dans une variante de la séquence de maintien prédéterminée, le procédé peut consister à placer chaque parallélogramme P de liaison déformable dans la configuration de travail après une durée prédéterminée. Cette durée peut être déterminée de sorte à s'écouler depuis la détection de l'angle de pivotement β1 ou d'un autre angle de pivotement détecté par le détecteur 5, tel que l'angle de pivotement de 90°. Cette durée peut être déterminée de sorte à s'écouler jusqu'au moment où l'angle de pivotement correspond à un angle de pivotement égal à la deuxième valeur d'angle de consigne β2.

De préférence, la première valeur de consigne β1 peut être présélectionnée entre 15° et 30°, plus préférentiellement entre 20° et 25°, et/ou la deuxième valeur de consigne β2 peut être présélectionnée entre 120° et 160°, plus préférentiellement entre 145° et 150°.

Dans une forme de réalisation préférentielle de l'agencement de chaque parallélogramme P de liaison déformable dans la configuration particulière, le procédé peut consister à commander les actionneurs 4c de sorte à déplacer les branches 4a, 4b articulées pour que chaque parallélogramme P de liaison déformable présente une forme rectangulaire (figure 3 en traits continus et figure 4).

Dans la forme de réalisation préférentielle de chaque actionneur 4c consistant en au moins un vérin à double effet et à double tige, le procédé peut consister préférentiellement, pour placer chaque parallélogramme P de liaison déformable dans la configuration particulière, à commander l'actionneur de sorte que l'une 40c des deux tiges soit dans l'état de sortie et l'autre 41c dans l'état d'entrée (figure 4).

Une telle charrue C ou un tel procédé selon la présente invention permet de résoudre la problématique de positionnement du dispositif de travail additionnel 2 du bon côté, lors du retournement de la charrue C et plus particulièrement du rouleau, lorsque le dispositif de travail additionnel 2 est formé par un tel rouleau.

La charrue C réversible peut consister soit en une charrue portée attelée à l'avant ou à l'arrière du véhicule tracteur V, soit en une charrue semi-portée. Dans le cas d'une charrue semi-portée, le nombre de corps de labour 1a est important, notamment un nombre supérieur à six et le bâti 3 de la charrue C peut s'appuyer sur le sol S au moyen d'un chariot comportant par exemple deux roues. Les corps de labour 1a peuvent être répartis sur la partie avant et la partie arrière du bâti 3. Ainsi, la charrue C semi-portée peut disposer d'un dispositif de travail additionnel 2 avant et d'un dispositif de travail additionnel 2 arrière. Une telle charrue semi-portée n'est pas représentée sur les figures.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de contrôle et de commande d'au moins un dispositif de travail additionnel (2) équipant une charrue (C) réversible portée ou semi-portée, ladite charrue (C) étant apte à être attelée à un véhicule tracteur (V) et comprenant un bâti (3) longitudinal, au moins un dispositif de travail principal (1) du sol (S) monté sur le bâti (3) et au moins un dispositif de travail additionnel (2) relié au bâti (3) par l'intermédiaire d'au moins deux bras de liaison (4), le bâti (3) étant apte à être soulevé par rapport au sol (S) et à pivoter autour d'un axe (X) de pivotement, de préférence de l'ordre de 180°, pour réaliser le retournement de la charrue (C) depuis une première position de travail jusqu'à une deuxième position de travail et réciproquement, chaque bras de liaison (4) comprenant deux branches (4a, 4b) articulées et arrangées de manière à constituer un parallélogramme (P) de liaison déformable et au moins un actionneur (4c) permettant d'actionner le déplacement des branches (4a, 4b), le procédé de contrôle consistant, lors du retournement de la charrue (C), avec en outre un détecteur (5) d'angle de pivotement du bâti (3) et une unité de contrôle et de commande (6) électronique reliée fonctionnellement au détecteur (5) et aux actionneurs (4c), en considérant un sens de pivotement positif du bâti (3) autour de l'axe (X) de pivotement depuis l'une des positions de travail, d'angle de pivotement nul, à l'autre position de travail à détecter l'angle de pivotement du bâti (3), **caractérisé en ce qu'**il consiste en outre :
- à comparer l'angle de pivotement du bâti (3) avec une valeur d'angle de consigne (β1) présélectionnée entre 15° et 30°, de préférence entre 20° et 25°,
- lorsque l'angle de pivotement ainsi détecté correspond à la valeur d'angle de consigne (β1) présélectionnée, à commander chaque parallélogramme (P) de liaison déformable dans une configuration particulière et à maintenir cette dernière selon une séquence de maintien prédéterminée.

2. Procédé de contrôle et de commande selon la revendication 1, **caractérisé en ce qu'**il consiste, dans la séquence de maintien prédéterminée, à détecter l'angle de pivotement du bâti (3) et à le comparer à une deuxième valeur de consigne (β2) présélectionnée entre 90° et 180° et lorsque l'angle de pivotement ainsi détecté correspond à la deuxième valeur d'angle de consigne (β2) présélectionnée, à placer chaque parallélogramme (P) de liaison déformable dans une autre configuration.

3. Procédé de commande selon la revendication 2, **caractérisé en ce que** la deuxième valeur de consigne (β2) est présélectionnée entre 120° et 160°, de préférence entre 145° et 150°.

4. Procédé de commande selon l'une quelconque des revendications 1 à 3, **caractérisé en ce que** la commande de chaque parallélogramme (P) de liaison déformable dans la configuration particulière consiste à commander les actionneurs (4c), de sorte à déplacer les branches (4a, 4b) articulées pour que chaque parallélogramme (P) de liaison déformable présente une forme rectangulaire.

5. Procédé de commande selon l'une quelconque des revendications 1 à 4, **caractérisé en ce que** chaque actionneur (4c) consiste en au moins un vérin à double effet et à double tige et **en ce qu'**il consiste, pour commander chaque parallélogramme (P) de liaison déformable dans la configuration particulière, à commander l'actionneur de sorte que l'une (40c) des deux tiges soit dans l'état de sortie et l'autre (41c) dans l'état d'entrée.

6. Charrue (C) réversible apte et destinée à être attelée à un véhicule tracteur (V) et comprenant un bâti (3) longitudinal, au moins un dispositif de travail principal (1) du sol (S) monté sur le bâti (3) et au moins un dispositif de travail additionnel (2) relié au bâti (3) par l'intermédiaire d'au moins deux bras de liaison (4), le bâti (3) étant apte à être soulevé par rapport au sol (S) et à pivoter autour d'un axe (X) de pivotement, de préférence de l'ordre de 180°, pour réaliser le retournement de la charrue (C) depuis une première position de travail jusqu'à une deuxième position de travail et réciproquement, chaque bras de liaison (4) comprenant deux branches (4a, 4b) articulées et arrangées de manière à constituer un parallélogramme (P) de liaison déformable et au moins un actionneur (4c) permettant d'actionner le déplacement des branches (4a, 4b) de sorte à pouvoir commander le parallélogramme (P) de liaison déformable dans des configurations variées, la charrue (C) réversible comprenant en outre un détecteur (5) d'angle de pivotement du bâti (3) et une unité de contrôle et de commande (6) électronique reliée au détecteur (5) et aux actionneurs (4c), **caractérisée en ce que** l'unité de contrôle et de commande (6) est configurée, en considérant un sens de pivotement positif du bâti (3) autour de l'axe (X) de pivotement depuis l'une des positions de travail, d'angle de pivotement nul, à l'autre position de travail, pour comparer l'angle de pivotement détecté par rapport à une valeur d'angle de consigne (β1) présélectionnée entre 15° et 30°, plus préférentiellement entre 20° et 25° et, lorsque l'angle de pivotement ainsi détecté correspond à la valeur d'angle de consigne (β1), pour commander chaque parallélogramme (P) de liaison déformable dans une configuration particulière et pour maintenir cette dernière selon une séquence de maintien prédéterminée.

7. Charrue (C) réversible selon la revendication 6, **caractérisée en ce que** l'unité de contrôle et de commande (6) est configurée, dans la séquence de maintien prédéterminée, pour comparer l'angle de pivotement détecté à une deuxième valeur de consigne (β2) présélectionnée entre 90° et 180° et lorsque l'angle de pivotement ainsi détecté correspond à la deuxième valeur d'angle de consigne (β2), pour commander chaque parallélogramme (P) de liaison déformable dans une autre configuration.

8. Charrue (C) réversible selon la revendication 6 ou la revendication 7, **caractérisée en ce que** chaque parallélogramme (P) de liaison déformable présente une forme rectangulaire dans la configuration particulière.

9. Charrue (C) réversible selon l'une quelconque des revendications 6 à 8, **caractérisée en ce que** le dispositif de travail additionnel (2) comprend des moyens de roulement ou de roulage formant un rouleau (2a) et une poutre support (2b), sur laquelle est monté le rouleau et **en ce que** la poutre support (2b) est reliée au bâti (3) par l'intermédiaire des bras de liaison (4).

10. Charrue (C) réversible selon l'une quelconque des revendications 6 à 9, **caractérisée en ce que** le détecteur (5) d'angle de pivotement consiste en au moins un capteur de position angulaire.

11. Charrue (C) réversible selon l'une quelconque des revendications 6 à 10, **caractérisée en ce que** le détecteur (5) d'angle de pivotement et/ou l'unité de contrôle et de commande (6) électronique est/sont monté(e) (s) chacun sur le bâti (3), de préférence au plus près de l'attelage avec le véhicule tracteur (V), ou sur au moins l'un des bras de liaison (4), de préférence sur l'une des branches (4a, 4b).

12. Charrue (C) réversible selon l'une quelconque des revendications 6 à 11, **caractérisée en ce que** le détecteur (5) d'angle de pivotement est relié à l'unité de contrôle et de commande (6) électronique, soit en étant intégré dans l'unité de contrôle et de commande (6) électronique, soit étant dissocié de l'unité de contrôle et de commande (6) électronique, l'unité de contrôle et de commande (6) électronique étant de préférence montée dans un boîtier, de préférence un boîtier étanche.

13. Charrue (C) réversible selon l'une quelconque des revendications 6 à 12, **caractérisée en ce que** chaque actionneur (4c) consiste en au moins un vérin à double effet et à double tige.
